# EUROPEAN PATENT APPLICATION

(11) **EP 3 023 192 A1**
(43) Date of publication of application: **25.05.2016**
(21) Application number: 15193286.0
(22) Date of filing: 05.11.2015
(51) Int. Cl.: B23Q 3/08, B25B 5/06, B25B 5/12

(54) **WORKPIECE FIXING JIG**

(30) Priority: 20.11.2014 JP 2014235586
(71) Applicant: TSUDAKOMA KOGYO KABUSHIKI KAISHA, Kanazawa-shi, Ishikawa-ken 921-8650 (JP)
(72) Inventor: TATSUDA, Yoshinori, Ishikawa-ken, 921-8650 (JP); NISHITA, Youichi, Ishikawa-ken, 921-8650 (JP); IWATA, Toshiharu, Ishikawa-ken, 921-8650 (JP)
(74) Representative: Eisenführ Speiser

(57) **Abstract**

In a workpiece fixing jig (1), at least a top surface and a bottom surface of a base plate (3) is made of fiber reinforced plastic. The base plate (3) has an attachment hole (3a, 3b, 3c, 3d) that extends through the base plate (3) in a thickness direction, and an insert member (31, 33, 35, 37) made of a metal is attached to the base plate (3) such that the insert member (31, 33, 35, 37) is inserted in the attachment hole (3a, 3b, 3c, 3d). The insert member (31, 33, 35, 37) has a flow path hole (31 a, 33a, 35a, 37a) that functions as a fluid channel for enabling fluid to through the base plate (3).

## Description

### BACKGROUND OF THE INVENTION

### 1. Field of the Invention

The present invention relates to workpiece fixing jigs, and more particularly, to a workpiece fixing jig including a flat-plate-shaped base plate, a reference seat that is provided on the base plate and on which a workpiece is placed, and a clamping device that clamps the workpiece in cooperation with the reference seat by applying a pressing force to the workpiece in a direction toward the reference seat.

### 2. Description of the Related Art

Ajig having the above-described structure is disclosed in Japanese Unexamined Patent Application Publication No. 2011-255452 (hereinafter referred to as Patent Document 1). More specifically, the jig disclosed in Patent Document 1 includes a rectangular flat-plate-shaped jig plate and a base plate that is smaller than the jig plate and placed on the jig plate. A workpiece is placed on reference pieces that are provided on the base plate and serve as reference seats. The jig includes clamping devices provided on the jig plate. The clamping devices apply a pressing force to the workpiece in a direction toward the reference pieces with arms, so that the workpiece is clamped between the arms of the clamping devices and the reference pieces and the position of the workpiece is fixed. Such a workpiece fixing jig is used to fix the position of the workpiece on a table of a machine tool or the like when the workpiece is processed by the machine tool or the like.

A machining jig including a portion made of carbon-fiber-reinforced plastic (CFRP) is well-known (see, for example, Japanese Unexamined Utility Model Registration Application Publication No. 5-028586 (hereinafter referred to as Patent Document 2)). In the above-described workpiece fixing jig disclosed in Patent Document 1, a base plate made of CFRP may be used to reduce the weight of the base plate.

In the jig disclosed in Patent Document 1, fluid channels (fluid supply paths) are formed in, for example, the jig plate. The fluid channels allow pressurized fluid to pass therethrough so that the fluid can be supplied to devices on the jig plate. More specifically, in the above-described workpiece fixing jig, the fluid is supplied to the devices on the jig plate, and the fluid channels that allow the fluid to pass therethrough are formed in the jig plate, so that the fluid can be supplied from the outside to the devices on the jig plate. In the case where the devices to which the fluid is to be supplied is located on the base plate, similar fluid channels are also formed in the base plate.

The devices that are provided on the jig plate or the base plate and to which the fluid is supplied may include not only the above-described clamping devices which receive pressurized fluid (pressure oil or the like) as a working fluid but also a mechanism for positioning the workpiece on the base plate; a structure for supplying cleaning fluid or compressed air to the reference seats (reference surfaces) or the like to keep the reference seats or the like free from machining dust, dirt, etc.; and a structure for supplying air for confirming whether or not the workpiece is appropriately seated on the reference seats.

In such a case, when the base plate is made of CFRP as described above, there is a problem that delamination of CFRP that forms the base plate may occur. This will be described in more detail.

In general, in the case where a fluid channel is formed in a component of a mechanical device, a hole is formed in the component and a pipe joint or the like is connected to the hole. The hole is used as the fluid channel. Accordingly, when a fluid channel is formed in the base plate as described above, a hole is formed in the base plate and used as the fluid channel as in the general case.

CFRP is formed by stacking prepreg layers impregnated with, for example, a matrix resin and curing the stack of prepreg layers with heat, and has a multilayer structure in which layer bodies are stacked together. Therefore, when a hole is formed with a tool, defects, such as cracks, are easily formed in the hole, in particular, in regions between the layer bodies of the multilayer structure. When a hole is formed in the base plate made of CFRP as described above and the thus-formed hole is simply used as the fluid channel, the pressure of the fluid that passes through the hole is applied to the defective portions formed in the hole-forming process. As a result, there is a risk that so-called delamination, which is separation of layer bodies in the multilayer structure of CFRP, will occur.

In the case where delamination of CFRP that forms the base plate occurs, the rigidity (strength) of the base plate decreases and there is a risk that the base plate will be bent or damaged. Also, the fluid to be supplied may leak through the separated portions, and there is a risk that the required amount of fluid cannot be supplied and the above-described devices will not be able to operate appropriately.

### SUMMARY OF THE INVENTION

In light of the above-described problem, an object of the present invention is to provide a workpiece fixing jig with which delamination of a base plate (layer bodies that form the base plate) does not occur even when the base plate is made of CFRP and a fluid channel is formed in the base plate.

To achieve the above-described object, according to the present invention, the above-described workpiece fixing jig has a structure in which at least a top surface and a bottom surface of the base plate is made of carbon-fiber-reinforced plastic. The base plate has an attachment hole that extends through the base plate in a thickness direction, and an insert member made of a metal is attached to the base plate such that the insert member is inserted in the attachment hole. The insert member has a flow path hole that functions as a fluid channel for enabling fluid to through the base plate.

The "structure in which at least a top surface and a bottom surface of the base plate is made of carbon-fiber-reinforced plastic" is not limited to the structure in which the entire body of the base plate is made of CFRP as described above, and includes a sandwich structure in which surface portions (top and bottom surface portions) of the base plate in the thickness direction are made of CFRP materials and a core material (for example, a foam material) is interposed between the CFRP materials, which function as surface materials, such that the CFRP materials are bonded to the core material. In addition, in the base plate having the sandwich structure, the above-described delamination is not limited to separation of layer bodies included in the CFRP, and includes separation of the CFRP materials from the core material. In addition, in the following description, components that are "made of CFRP" include components having the above-described sandwich structure unless specified otherwise.

The workpiece fixing jig according to the present invention may be structured such that the insert member projects from the bottom surface of the base plate in a state in which the insert member is attached to the base plate, and the bottom surface of the insert member serves as a seat surface of the base plate.

In the workpiece fixing jig according to the present invention, a base plate made of CFRP is used to reduce the weight of the base plate. When the fluid channel is formed in the base plate made of CFRP, instead of simply using a hole formed in the base plate as the fluid channel, the hole formed in the base plate is used as the attachment hole, and the metal insert member is inserted in the attachment hole. The flow path hole that functions as the fluid channel is formed in the insert member. Accordingly, when the fluid passes through the base plate, the pressure of the fluid is not directly applied to the layer bodies that form the base plate (CFRP). Therefore, delamination of the base plate due to the pressure of the fluid that passes through the base plate does not occur, and the risk that the rigidity (strength) of the base plate will be reduced and a leakage of the fluid will occur as a result of the delamination can be reduced.

In addition, since the bottom surface of the insert member serves as the seat surface of the base plate, the degree of parallelization (levelness) of the top surface of the base plate with respect to the installation surface on which the base plate is installed (top surface of a jig plate, table surface of a machine tool, etc.) can be increased. More specifically, a plate member made of CFRP is formed by stacking prepreg layers and curing the stack of prepreg layers with heat, as described above. In the heating process, the plate member is slightly bent, for example, and the levelness of the top surface and/or bottom surface may be reduced. Accordingly, the bottom surface of the metal insert member is formed as the seat surface of the base plate. Since the metal insert member is easily to process, the amount by which the insert member projects from the base plate may be adjusted by subjecting the bottom surface of the insert member to, for example, a grinding process, and accordingly the levelness of the top surface of the base plate in the state in which the base plate is installed can be increased.

Aworkpiece is placed on the base plate with the reference seat disposed therebetween. If the levelness of the top surface of the base plate is not sufficient, the workpiece cannot be retained in the desired position with respect to the installation surface, and the workpiece cannot be appropriately processed. In contrast, with the above-described structure, even when the base plate is made of CFRP, the levelness of the top surface of the base plate can be increased. Therefore, the above-described problem that the workpiece cannot be appropriately processed does not occur.

### BRIEF DESCRIPTION OF THE DRAWINGS

Fig. 1 is a partially sectioned side view of a workpiece fixing jig according to an embodiment of the present invention;
Fig. 2 is a plan view of the workpiece fixing jig according to the embodiment of the present invention;
Fig. 3 is a partially sectioned side view of an important portion of the workpiece fixing jig according to the embodiment of the present invention;
Fig. 4 is a partially sectioned side view of another important portion of the workpiece fixing jig according to the embodiment of the present invention;
Figs. 5A and 5B are partially sectioned side views of important portions of workpiece fixing jigs according to other embodiments of the present invention; and
Fig. 6A is a partially sectioned side view of an important portion of a workpiece fixing jig according to another embodiment of the present invention, and Fig. 6B is a sectional view of Fig. 6A taken along line VIB-VIB.

### DESCRIPTION OF THE PREFERRED EMBODIMENTS

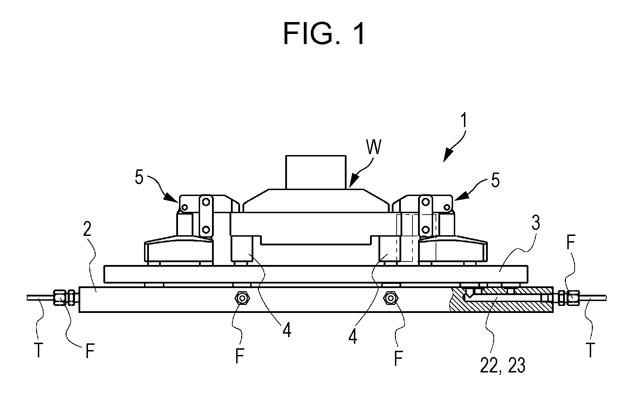

An embodiment of the present invention will be described with reference to Figs. 1 to 4.

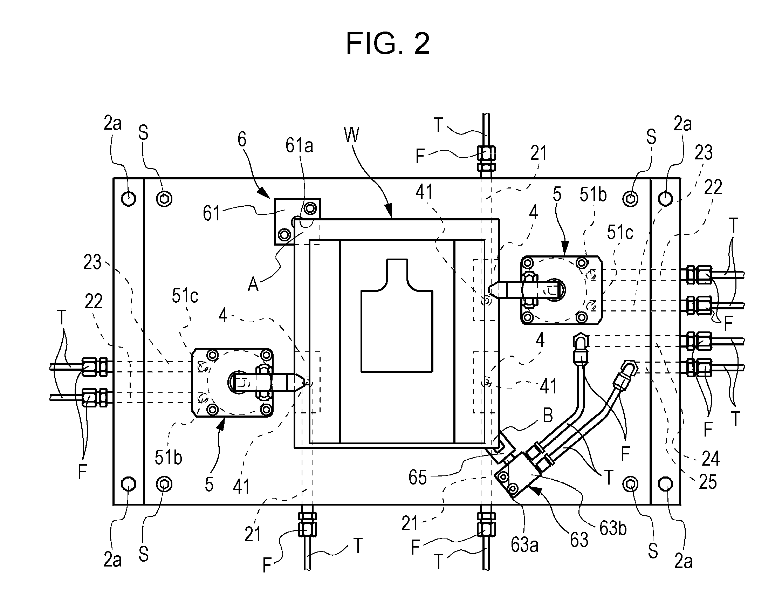

Referring to Figs. 1 and 2, a workpiece fixing jig (hereinafter also referred to simply as "jig") 1 according to the present embodiment includes a rectangular flat-plate-shaped jig plate 2; a rectangular flat-plate-shaped base plate 3 that is smaller than the jig plate 2 and placed on the jig plate 2; seat blocks 4 that are placed on the base plate 3 and that serve as reference seats; and clamping devices 5 that clamp a workpiece W in cooperation with the seat blocks 4 to fix the position of the workpiece W. The workpiece fixing jig 1 having the above-described structure is, for example, fixed to a table (not shown) of a machine tool.

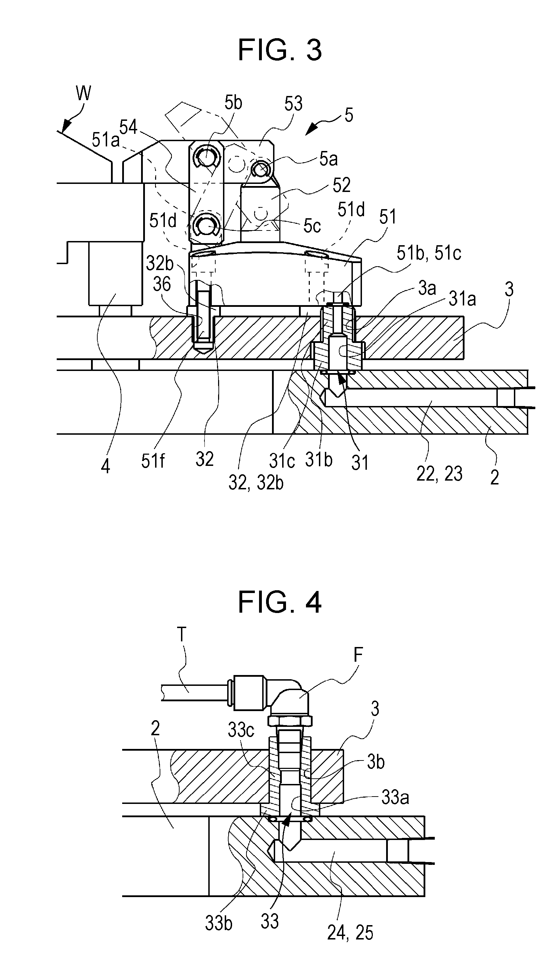

In the present embodiment, two clamping devices 5 are provided, both of which are placed on the base plate 3. The clamping devices 5 have a structure similar to that of the clamping devices disclosed in the above-described Patent Document 1. More specifically, each clamping device 5 includes an operating rod 52 that is moved vertically by a pressure of a working fluid (for example, oil) so that a clamp arm 53 swings (Fig. 3). Thus, each clamping device 5 is configured to be capable of receiving the working fluid.

In the present embodiment, the jig plate 2 is made of a metal (iron, aluminum, etc.), and is a flat-plate-shaped member having a rectangular shape in plan view. The jig plate 2 has a plurality of fluid channels through which fluid is supplied to the clamping devices 5 and other devices provided on the base plate 3. The fluid channels are formed so as to correspond to the devices including the above-described clamping devices 5, and are formed as holes that open in the side surfaces and the top surface (surface on which the base plate 3 is placed) of the jig plate 2. Pipe joints F are attached to the openings of the fluid channels in the side surfaces. The pipe joints F are provided to connect the jig plate 2 to an external device (not shown) from which the fluid is supplied through fluid pipes T. The jig plate 2 has through holes 2a formed so as to extend through the jig plate 2 in the thickness direction at positions near the four corners of the jig plate 2 in plan view. The jig plate 2 is fixed to a table or the like of the above-described machine tool with screw members (not shown), such as bolts, inserted through the through holes 2a.

The base plate 3 is a flat-plate-shaped member having a rectangular shape in plan view. In the present embodiment, in plan view, the dimension of the base plate 3 is the same as that of the jig plate 2 in the short-side direction, and the dimension of the base plate 3 is slightly smaller than that of the jig plate 2 in the long-side direction. In the present embodiment, the entire body of the base plate 3 is made of CFRP. The base plate 3 also has through holes formed so as to extend through the base plate 3 in the thickness direction at positions near the four corners of the base plate 3 in plan view. The base plate 3 is fixed to the jig plate 2 with screw members S inserted through the through holes. Although not illustrated, positioning pins are formed on the jig plate 2 so as to project from the top surface of the jig plate 2, and positioning holes are formed in the base plate 3. The positioning pins on the jig plate 2 are inserted into the positioning holes in the base plate 3, so that the base plate 3 is positioned relative to the jig plate 2.

The seat blocks 4, which serve as reference seats, are arranged on the base plate 3 as described above, and are fixed to the base plate 3. In the present embodiment, three seat blocks 4, which are rectangular-parallelepiped-shaped blocks, are provided on the base plate 3. The three seat blocks 4 are arranged in accordance with the size of the workpiece W, which is processed on the jig 1, so as to support the workpiece W in cooperation with a positioning block, which will be described below. Although not illustrated, each seat block 4 is fixed to the base plate 3 in the following manner. That is, screw members, such as bolts, are inserted through a plurality of insertion holes (for example, two insertion holes) formed in each seat block 4, and screwed into female threaded holes that are formed in the top surface of the base plate 3.

In addition, in the present embodiment, the seat blocks 4 have fluid channels (air channels) 41, through which the air passes, formed therein. The air used to confirm whether or not the workpiece W is present is supplied to the fluid channels 41. More specifically, the seat blocks 4 have through holes that extend through the seat blocks 4 from the bottom surfaces (surfaces facing the base plate 3) to the top surfaces (surfaces on which the workpiece W is placed. These through holes function as the air channels 41. The jig plate 2 has fluid channels 21 through which the air is supplied to the fluid channels 41 in the seat blocks 4. Fluid pipes T that extend from an external air supplying device (not shown) are connected to the fluid channels 21 by pipe joints F. The fluid channels 21 in the jig plate 2 and the fluid channels 41 in the seat blocks 4 communicate with each other through fluid channels formed in the base plate 3, so that the air can be supplied to the fluid channels 41 in the seat blocks 4.

In the above-described structure, the fluid channels 41 open in the top surfaces of the seat blocks 4, that is, in the seat surfaces for the workpiece W. When the workpiece W is appropriately seated on the seat surfaces, the openings in the seat surfaces are blocked by the workpiece W. Therefore, when the air is supplied as described above, the air pressure in the fluid channels through which the air is supplied increases. If dirt, machining dust, or the like is present on the seat surfaces of the seat blocks 4, the workpiece W is slightly lifted above the seat surfaces when seated, and the openings in the seat surfaces are not blocked. Therefore, the above-described pressure increase does not occur. Accordingly, whether or not the workpiece W is appropriately seated on the seat blocks 4 can be detected by using means for detecting the air pressure in the fluid pipes T through which the air for confirming the seated state is supplied.

As described above, two clamping devices 5 are provided on the base plate 3. The clamping devices 5 are arranged at locations corresponding to two of the three seat blocks 4 that are displaced from each other in the long-side direction of the base plate 3. Each clamping device 5 includes a device housing 51 that includes a cylinder (not shown), which is a hollow cylindrical portion, and serves as a main body; an operating rod 52 that is inserted in the cylinder of the device housing 51 such that the operating rod 52 is vertically movable; a lever-shaped clamp arm 53 that is connected to the operating rod 52 such that the clamp arm 53 is swingable; and a link member 54 that supports the clamp arm 53 (Fig. 3).

As described above, in each clamping device 5, the operating rod 52 is inserted in the cylinder of the device housing 51 such that the operating rod 52 is vertically movable relative to the device housing 51. The operating rod 52 is moved in the vertical direction by pressure oil that is supplied to the cylinder as working fluid.

More specifically, in each clamping device 5, the operating rod 52 is constantly urged downward by an urging member (not shown), such as a compression spring, in the cylinder, and the pressure oil is supplied to a space below the operating rod 52 in the cylinder (pressure chamber). In the state in which the pressure oil is not supplied to the cylinder, the operating rod 52 is retained at the lowermost position (standby position), as shown by the two-dot chain lines in Fig. 3, owing to the urging force applied by the urging means. When the pressure oil is supplied to the cylinder, the oil pressure in the cylinder increases, so that the operating rod 52 is urged upward by the hydraulic force and moved upward toward an operating position against the urging force applied by the urging means, and a hydraulic urging force is applied to the clamp arm 53. When the supply of the pressure oil to the cylinder is stopped and discharge of the pressure oil from the cylinder is enabled, the operating rod 52 is moved downward by the urging force applied by the urging means, and the pressure oil is discharged from the cylinder.

Each clamping device 5 is connected to two fluid channels, one of which is used to supply the pressure oil to the cylinder and the other of which is used to discharge the pressure oil from the cylinder. Accordingly, the jig plate 2 has a fluid channel 22 through which the pressure oil is supplied and a fluid channel 23 through which the pressure oil is discharged for each clamping device 5. The fluid channels 22 and 23 are connected to the corresponding clamping devices 5 through fluid channels formed in the base plate 3.

Although a so-called single-acting hydraulic cylinder with which the operating rod 52 is moved to the standby position by the urging force applied by the urging member, such as a compression spring, is described above, the operating rod 52 may instead be reciprocated by a double-acting hydraulic cylinder with which the operating rod 52 is moved to each of the operating position and the standby position by a hydraulic operation. In such a case, a fluid channel for supplying the pressure oil and a fluid channel for discharging the pressure oil are formed in the jig plate 2 for each of a pressure chamber for forward movement and a pressure chamber for backward movement in the cylinder. In the above-described structure, the fluid channel for supplying the pressure oil and the fluid channel for discharging the pressure oil are formed individually. However, a single fluid channel may be used for both supplying and discharging the pressure oil.

In each clamping device 5, the clamp arm 53 is a lever-shaped member, as described above. One end portion of the clamp arm 53 in the longitudinal direction is connected to a distal end portion (top end portion) of the operating rod 52 with a shaft 5a such that the clamp arm 53 is swingable. An intermediate portion of the clamp arm 53 in the longitudinal direction is connected to the link member 54. The clamp arm 53 is supported by the link member 54, which is supported by the device housing 51. One end portion of the link member 54 in the longitudinal direction is connected to the intermediate portion of the clamp arm 53 with a shaft 5b, and the other end portion of the link member 54 is connected to a support portion 51 a of the device housing 51 with a shaft 5c. The link member 54 is rotatable relative to each of the clamp arm 53 and the device housing 51 (support portion 51a).

The clamp arm 53 is rotatably supported by the link member 54, which is supported by the device housing 51, at the intermediate portion thereof. The one end portion of the clamp arm 53 is connected to the operating rod 52. When the operating rod 52 is vertically moved, the clamp arm 53 swings around the shaft 5b with which the clamp arm 53 is connected to the link member 54. In each clamping device 5, the operating rod 52 is moved in the vertical direction at a constant position in the horizontal direction. The link member 54, which supports the shaft 5b that serves as a fulcrum of the clamp arm 53, is rotatably provided on the device housing 51, and the shaft 5b is capable of moving in a direction toward and away from the shaft 5a (operating rod 52), that is, in a front-back direction, so that the clamp arm 53 is enabled to swing. With this structure, the amount by which the other end portion of the clamp arm 53 (end portion at the end opposite to the one end portion) is moved in the front-back direction when the clamp arm 53 swings is greater than that in the case where the position of the fulcrum is fixed.

Each clamping device 5 having the above-described structure is provided on the base plate 3 at a position where the clamping device 5 is farther from the center of the base plate 3 than the corresponding seat block 4 is in the longitudinal direction, and is arranged such that the clamp arm 53 extends toward the seat block 4 and the bottom surface of the other end portion of the clamp arm 53 is capable of facing the top surface (seat surface) of the seat blocks 4 in the vertical direction. Each clamping device 5 is fixed to the base plate 3 in the following manner. That is, screw members 51f, such as bolts, are inserted through a plurality of insertion holes 51 d (four insertion holes 51 d in the illustrated example), which are formed in the device housing 51 of the clamping device 5, and screwed into female threaded holes that are formed in the base plate 3 so as to face upward.

In each clamping device 5, the pressure oil is not supplied to the cylinder when the workpiece W is not placed on the seat blocks 4. Accordingly, the operating rod 52 is at the lowermost position, and the clamp arm 53 is in the state in which the clamp arm 53 has swung upward, as shown by the two-dot chain lines in Fig. 3. When the workpiece W is placed on the seat blocks 4, supply of the pressure oil to the cylinder is started. Accordingly, the operating rod 52 moves upward and the clamp arm 53 swings toward the workpiece W. As a result, the workpiece W is clamped between the bottom surface of the other end portion of the clamp arm 53 and the seat surface of the corresponding seat block 4, as shown by the solid lines in Fig. 3. In addition, the clamp arm 53 receives the urging force based on the oil pressure in the cylinder, and applies a pressing force to the workpiece W in a downward direction (direction toward the seat surface). Thus, the position of the workpiece W is fixed.

According to the present embodiment, the jig 1 includes a positioning device 6 for positioning the workpiece W on the base plate 3. The positioning device 6 includes a positioning block 61 that supports the workpiece W in cooperation with the above-described seat blocks 4, and a pressing mechanism that presses the workpiece W against the positioning block 61 (Fig. 2).

More specifically, the positioning block 61 is a block that is substantially rectangular-parallelepiped-shaped, and has a receiving portion 61 a in an upper section thereof. The receiving portion 61 a receives a corner of the workpiece W (corner A in Fig. 2). More specifically, the positioning block 61 has a recess formed by cutting off a portion of the positioning block 61 in an upper section thereof. The recess has two inner surfaces that are perpendicular to each other. The recess functions as the above-described receiving portion 61 a, and the two inner surfaces that are perpendicular to each other serve as receiving surfaces that receive the workpiece W (above-described corner A).

The depth (cutting depth) of the recess (receiving portion 61 a) from the top surface of the positioning block 61 is such that the vertical position of the bottom surface of the recess (receiving portion 61 a) is the same as the vertical position of the seat surfaces of the seat blocks 4 in the state in which the positioning block 61 is placed on the base plate 3. In other words, the bottom surface of the receiving portion 61 a in the positioning block 61 and the seat surfaces of the seat blocks 4 are on the same horizontal plate in the vertical direction. The positioning block 61 is fixed to the base plate 3 such that the two side surfaces that form the corner A of the workpiece W come into contact with the two receiving surfaces of the receiving portion 61 a when the workpiece W is placed at a predetermined position on the jig 1.

The pressing mechanism includes a linear cylinder (for example, a hydraulic cylinder) 63 and a pressing body 65. The linear cylinder 63 is formed in a rectangular-parallelepiped-shaped (block-shaped) cylinder housing 63b. The pressing body 65 is attached to the distal end of a piston 63a of the linear cylinder 63. The linear cylinder 63 included in the pressing mechanism is disposed near a corner of the workpiece W that is diagonally opposite the corner A (corner B in Fig. 2) when the workpiece W is placed at the predetermined position and received by the positioning block 61. The linear cylinder 63 is fixed to the base plate 3 such that the piston 63a extends toward the receiving portion 61 a of the positioning block 61 (more specifically, toward the position at which the two receiving surfaces of the receiving portion 61 a intersect).

The piston 63a of the linear cylinder 63 is at a vertical position such that the piston 63a is capable of facing the receiving surfaces of the positioning block 61. In other words, in the state in which the linear cylinder 63 is mounted on the base plate 3, the piston 63a is at a vertical position such that the piston 63a is capable of facing the corner B of the workpiece W placed on the jig 1. As illustrated in Fig. 2, the pressing body 65 attached to the end of the piston 63a branches into two segments with respect to the piston 63a, and the tip portions of the two segments are capable of simultaneously coming into contact with the two side surfaces that face the two tip portions and form the corner B of the workpiece W.

In the positioning device 6, when the workpiece W is placed on the seat surfaces of the seat blocks 4 and the bottom surface of the receiving portion 61 a of the positioning block 61, the piston 63a of the linear cylinder 63 included in the pressing mechanism is driven so as to move toward the workpiece W. Accordingly, the two tip portions of the pressing body 65 come into contact with the two side surfaces of the corner B of the workpiece W and push the workpiece W toward the receiving portion 61 a of the positioning block 61. As a result, the two side surfaces of the corner A of the workpiece W are pressed against the two receiving surfaces of the receiving portion 61 a of the positioning block 61, and the pressing body 65 included in the pressing mechanism is pressed against the two side surfaces of the corner B, so that the position of the workpiece W is regulated at the side surfaces of the workpiece W. Thus, the workpiece W is positioned on the jig 1. When the workpiece W is to be removed from the jig 1, the piston 63a of the linear cylinder 63 is driven so as to move away from the workpiece W, so that the state in which the positioning block 61 and the pressing body 65 are pressed against the workpiece W is cancelled.

As described above, the pressing mechanism is configured such that the working fluid for moving the piston 63a in the forward and backward directions is supplied to and discharged from the linear cylinder 63. For this purpose, the jig plate 2 has fluid channels through which the working fluid is supplied and discharged. More specifically, the linear cylinder 63 is, for example, a hydraulic cylinder as described above, and may be of a single-acting type as with the above-described clamping devices 5. In such a case, the pressure oil is supplied to the pressure chamber of the cylinder (not shown) disposed in the cylinder housing 63b when the piston 63a is to be moved in the forward direction, and is discharged from the pressure chamber when the piston 63a is to be moved in the backward direction. For this purpose, the jig plate 2 has two fluid channels 24 and 25 that open in a side surface and the top surface of the jig plate 2. Similar to the above-described fluid channels 21, for example, pipe joints F are attached to the openings of the fluid channels 24 and 25 in the side surface, and other pipe joints F are connected to the openings of the fluid channels 24 and 25 in the top surface with fluid channels formed in the base plate 3 provided therebetween. Fluid pipes T are connected to the pipe joints F connected to the openings in the top surface, and are also connected to the cylinder housing 63b with other pipe joints. Thus, the pressure chamber in the linear cylinder 63 communicates with the fluid channels 24 and 25.

In the above-described workpiece fixing jig 1, as described above, the fluid channels 21 to 25 formed in the jig plate 2 communicate with the corresponding devices on the base plate 3 through the fluid channels in the base plate 3. In the present invention, the fluid channels in the base plate 3 are formed in insert members made of a metal that are inserted in the base plate 3. This structure will be described in detail.

Fig. 3 illustrates a fluid-channel structure of the base plate 3 for connecting the fluid channels 51 b and 51 c, which are formed in the device housing 51 of the clamping device 5 so as to communicate with the above-described cylinder, to the fluid channels 22 and 23 formed in the jig plate 2. In the present embodiment, as illustrated in Fig. 3, the inner diameter of the fluid channels 51 b and 51 c in the clamping device 5 is smaller than that of the fluid channels 22 and 23 in the jig plate 2. Although not illustrated, the base plate 3 also has a similar fluid-channel structure for connecting the fluid channels 41 in the seat blocks 4 to the fluid channels 21 in the jig plate 2.

The fluid-channel structure of the base plate for connecting the fluid channels 22 and 23 in the jig plate 2 to the fluid channels 51 b and 51 c in the clamping device 5 will now be described. The fluid-channel structure of the base plate 3 for connecting the fluid channel 22 in the jig plate 2 to the fluid channel 51 b in the clamping device 5 is identical to the fluid-channel structure of the base plate 3 for connecting the fluid channel 23 in the jig plate 2 to the fluid channel 51 c in the clamping device 5. Therefore, only one of them (the former fluid-channel structure) will be described and the description of the other (the latter fluid-channel structure) will be omitted.

The base plate 3 has a through hole 3a that extends through the base plate 3 in the thickness direction at a position where the through hole 3a faces the opening of the fluid channel 22 in the top surface of the jig plate 2 when the base plate 3 is positioned and fixed to the jig plate 2, as described above. The through hole 3a functions as the attachment hole according to the present invention. The through hole (attachment hole) 3a is formed such that the center thereof coincides with the center of the opening of the fluid channel 22 in the jig plate 2 in plan view when the base plate 3 is in the positioned state. The fluid channel 51 b in the clamping device 5 opens in the bottom surface of the device housing 51. The center of the opening of the fluid channel 51 b coincides with the center of the attachment hole 3a in the base plate 3 in plan view when the clamping device 5 is placed on the base plate 3.

The base plate 3 is structured such that an insert member 31 made of a metal is inserted in the attachment hole 3a. The insert member 31 is a cylindrical member having an outer diameter that changes substantially at the midpoint in the axial direction, and includes a large-diameter flange-shaped portion at one end thereof. Accordingly, the attachment hole 3a also has an inner diameter that changes at an intermediate point so that a step portion is formed in the attachment hole 3a. More specifically, the inner diameter of a portion of the attachment hole 3a at the bottom side of the base plate 3 is greater than that of a portion of the attachment hole 3a at the top side of the base plate 3, and the step portion is formed owing to the difference in the inner diameter. The inner diameter of each of the above-described portions of the attachment hole 3a corresponds to the outer diameter of the corresponding portion of the insert member 31.

The insert member 31 is inserted into the attachment hole 3a from the bottom side of the base plate 3, and is fixed to the base plate 3 such that an end surface of the above-described flange-shaped portion (flange portion) 31 b is in contact with the step portion of the attachment hole 3a. The insert member 31 is fixed to the base plate 3 as follows. That is, for example, the outer peripheral surface of a shaft portion 31 c of the insert member 31, which is a portion excluding the flange portion 31 b, is male threaded, and the inner peripheral surface of a portion of the attachment hole 3a having a small diameter (small-diameter portion) is female-threaded. The shaft portion 31 c of the insert member 31 is screwed into the small-diameter portion of the attachment hole 3a, and the outer peripheral surface of the insert member 31 and the inner peripheral surface of the attachment hole 3a are bonded together with an adhesive or the like applied thereto. Alternatively, the outer peripheral surface of the shaft portion 31c may be knurled, and the insert member 31 may be close-fitted to the attachment hole 3a or bonded to the attachment hole 3a with an adhesive.

The insert member 31 has a through hole 31 a that extends through the insert member 31 in the axial direction. The through hole 31 a is formed such that the center thereof coincides with the axis of the cylindrical insert member 31, and has an inner diameter that changes substantially at the midpoint, as illustrated in Fig. 3. More specifically, the through hole 31 a is formed such that, in the state in which the insert member 31 is inserted in the base plate 3, the inner diameter of a portion at the bottom side of the base plate 3 (side adjacent to the jig plate 2) is equal to the inner diameter of the fluid channel 22 in the jig plate 2, and the inner diameter of a portion at the top side of the base plate 3 (side adjacent to the clamping device 5) is equal to the inner diameter of the fluid channel 51 b in the clamping device 5.

As described above, in the state in which the base plate 3 is placed on the jig plate 2 and the clamping device 5 is placed on the base plate 3, the center of the attachment hole 3a in the base plate 3, that of the opening of the fluid channel 22 in the top surface of the jig plate 2, and that of the opening of the fluid channel 51 b in the clamping device 5 coincide with each other in plan view. Accordingly, the through hole 31 a in the insert member 31 inserted in the through hole 3a functions as a fluid channel that connects the fluid channel 22 to the fluid channel 51 b and enables the pressure oil supplied by the fluid channel 22 to flow toward the fluid channel 51 b. Thus, the through hole 31 a in the insert member 31 corresponds to the flow path hole according to the present invention.

In the illustrated structure, the inner diameter of the fluid channel 22 in the jig plate 2 and that of the fluid channel 51 b in the clamping device 5 are slightly increased in regions near the openings. To prevent leakage of the pressure oil through the connecting portion between the insert member 31 and the jig plate 2 and the connecting portion between the insert member 31 and the clamping device 5 (device housing 51), sealing members (O-rings) are arranged in the regions in which the inner diameters are increased.

In the present embodiment, the dimension of the insert member 31 in the axial direction is greater than the thickness of the base plate 3. In the state in which the insert member 31 is inserted in the attachment hole 3a as described above, the insert member 31 projects from the base plate 3 in the axial direction.

More specifically, the dimension of the flange portion 31 b of the insert member 31 in the axial direction is greater than the dimension of a large-diameter portion of the attachment hole 3a (portion below the step portion) in the axial direction. Accordingly, in the state in which the insert member 31 is attached such that the end surface of the flange portion 31 b is in contact with the step portion of the attachment hole 3a as described above, part of the flange portion 31 b of the insert member 31 projects from the bottom surface of the base plate 3. Also, in the state in which the base plate 3 is placed on the jig plate 2, the base plate 3 is arranged such that the bottom surface of the insert member 31 is in contact with the jig plate 2. In other words, the bottom surface of the insert member 31 serves as a seat surface of the base plate 3 for the jig plate 2.

In the present embodiment, fluids are supplied to the devices placed on the base plate 3, such as the clamping devices 5 and the seat blocks 4, through the fluid channels formed in the jig plate 2. Accordingly, the base plate 3 includes a plurality of insert members 31, which have the above-described structure, for each of the devices. Although not illustrated, the base plate 3 is structured such that the positions of the devices can be changed in accordance with, for example, the size of the workpiece W placed on the jig 1. The insert members 31 are provided at each of the locations at which the devices may be placed. The base plate 3 is placed on the jig plate 2 such that the seat surfaces thereof, which are the bottom surfaces of the insert members 31, are in contact with the jig plate 2.

In the present embodiment, each insert member 31 also projects from the top surface of the base plate 3. More specifically, the insert member 31 is formed such that the dimension of the shaft portion 31 c in the axial direction is greater than the dimension of the small-diameter portion of the attachment hole 3a in the axial direction. When the insert member 31 is in the attached state, the top end portion of the insert member 31 (end portion at the top side of the base plate 3) projects from the top surface of the base plate 3. Accordingly, the clamping devices 5 are placed not on the top surface of the base plate 3 but on the top surfaces of the insert members 31 at the position where the insert members 31 are provided. In other words, the top surfaces of the insert members 31 serve as some of seat surfaces of the base plate 3 for the clamping devices 5.

As described above, each clamping device 5 is fixed to the base plate 3 by inserting the screw members 51f through the insertion holes 51 d formed in the device housing 51 and screwing the screw members 51f into the female threaded holes formed in the base plate 3. In the present embodiment, the female threaded holes are formed in threaded-hole members 32 that are inserted in the base plate 3.

More specifically, the base plate 3 has four fitting holes 36 at each of locations at which each clamping device 5 may be installed (installation locations). The four fitting holes 36 are arranged so as to correspond to the four insertion holes 51 d formed in the device housing 51 of the clamping device 5. The fitting holes 36 are bottomed holes that open in the top surface of the base plate 3, and the depth of the fitting holes 36 is smaller than the thickness of the base plate 3. The threaded-hole members 32 are inserted in and fixed to the fitting holes 36.

Similar to the above-described insert member 31, each threaded-hole member 32 is also a cylindrical member and includes a flange portion 32b at one end thereof in the axial direction. The threaded-hole member 32 is inserted into the corresponding fitting hole 36 from the top side of the base plate 3, and is fixed to the base plate 3 such that an end surface of the flange portion 32b is in contact with the top surface of the base plate 3. The threaded-hole member 32 is fixed to the base plate 3 as follows. That is, for example, the outer peripheral surface of the threaded-hole member 32 is male threaded, and the inner peripheral surface of the fitting hole 36 is female threaded. The threaded-hole member 32 is screwed into the fitting hole 36, and the outer peripheral surface of the threaded-hole member 32 and the inner peripheral surface of the fitting hole 36 are bonded together with an adhesive or the like applied thereto. Alternatively, the threaded-hole member 32 may instead be driven into the fitting hole 36 so that the threaded-hole member 32 is closely fitted to the fitting hole 36.

Each threaded-hole member 32 has a bottomed hole that is formed such that the center thereof coincides with the axis of the threaded-hole member 32, and the inner peripheral surface of the hole is female threaded. Thus, each threaded-hole member 32 has a female threaded hole. The screw members 51f are inserted through the insertion holes 51 d formed in the device housing 51 of each clamping device 5, and are screwed into the threaded-hole members that are inserted in and fixed to the base plate 3. Thus, the clamping device 5 is fixed to the base plate 3 with the threaded-hole members 32 provided therebetween.

In this structure, the flange portions 32b of the threaded-hole members 32 project from the top surface of the base plate 3, and each clamping device 5 is placed on the top surfaces of the flange portions 32b of the threaded-hole members 32 in the installed state. In other words, the top surfaces of the threaded-hole members 32 also serve as some of seat surfaces for the clamping device 5. Thus, the top surfaces of the threaded-hole members 32 and the top surfaces of the insert members 31 form the seat surfaces for the clamping device 5. The seat blocks 4, the positioning block 61, and the linear cylinder 63 of the pressing mechanism are also fixed to the base plate 3 in a manner similar to that in which each clamping device 5 is fixed, by using threaded-hole members that are inserted in and fixed to the base plate 3.

The structure illustrated in Fig. 4 will now be described. Fig. 4 illustrates a fluid-channel structure of the base plate 3 for connecting the fluid pipes T connected to the linear cylinder 63 of the pressing mechanism to the fluid channels 24 and 25 in the jig plate 2 through the pipe joints F, the fluid pipes T enabling the pressure oil to be supplied to and discharged from the linear cylinder 63. This structure is similar to the above-described structure in which the fluid channel 22 in the jig plate 2 is connected to the fluid channel 51c in the clamping device 5.

More specifically, the base plate 3 has a through hole 3b that extends through the base plate 3 in the thickness direction at a position where the through hole 3b faces the opening of the fluid channel 24 (25) in the top surface of the jig plate 2 when the base plate 3 is positioned with respect to the jig plate 2 as described above. The through hole 3b functions as an attachment hole according to the present invention. The through hole (attachment hole) 3b is formed such that the center thereof coincides with the center of the opening of the fluid channel 24 (25) in the jig plate 2 in plan view when the base plate 3 is in the positioned state.

The base plate 3 is structured such that an insert member 33 made of a metal is inserted in the attachment hole 3b. The insert member 33 is a cylindrical member and includes a flange portion 33b at one end thereof in the axial direction. The outer diameter of a shaft portion 33c of the insert member 33, which is a portion excluding the flange portion 33b, is substantially the same as the inner diameter of the attachment hole 3b in the base plate 3. The insert member 33 is inserted into the attachment hole 3b from the bottom side of the base plate 3, and is fixed, by a method similar to the method for fixing the insert member 31, to the base plate 3 in such a manner that an end surface of the flange portion 33b is in contact with the bottom surface of the base plate 3.

Also in this structure, in the state in which the insert member 33 is attached to the base plate 3, the flange portion 33b projects from the bottom surface of the base plate 3. Similar to the bottom surface of the insert member 31, the bottom surface of the flange portion 33b of the insert member 33 also serves as a seat surface of the base plate 3 for the jig plate 2.

The insert member 33 also has a through hole 33a that extends through the insert member 33 in the axial direction. The center of the insert member 33 coincides with the axis of the insert member 33, and the inner diameter of the insert member 33 is the same as the inner diameter of the fluid channel 24 (25). When the base plate 3 is placed on the jig plate 2, the through hole 33a communicates with the fluid channel 24 (25). The through hole 33a corresponds to the flow path hole according to the present invention. The above-described pipe joint F is attached to the insert member 33 at the top side of the base plate 3, and the fluid pipe T is connected to the insert member 33 by the pipe joint F. Thus, each of the fluid channels 24 and 25 in the jig plate 2 is connected to the linear cylinder 63 of the pressing mechanism by the fluid channel formed of the through hole 33a in the base plate 3, the pipe joint F, and the fluid pipe T.

In the workpiece fixing jig 1 according to the present invention, the fluid-channel structure of the base plate 3 for allowing fluids that are to be supplied to the devices on the base plate 3 (or discharged from the devices on the base plate 3) to flow through the base plate 3 is not such that holes formed in the base plate 3 are simply used as the fluid channels as in a common apparatus of the related art. Instead, metal insert members are inserted in holes formed in the base plate 3, and through holes (flow path holes) formed in the insert members function as the fluid channels. Therefore, even when the base plate 3 is made of CFRP, delamination of the CFRP that forms the base plate 3 does not occur, and the risk that the rigidity (strength) of the base plate will be reduced or a leakage of the fluid will occur as a result of the delamination can be reduced.

In the case where the bottom surfaces of the insert members serve as the seat surfaces of the base plate 3 for the jig plate 2 as described above, the degree of parallelization or levelness (hereinafter referred to simply as "levelness") of the top surface of the base plate 3, on which the workpiece W is placed with the seat blocks 4 interposed therebetween, with respect to, for example, the table of the machine tool can be increased.

In the field of metal processing using a machine tool, the surface of a jig that receives the workpiece W is required to have a very high levelness. With regard to the CFRP that forms the base plate 3, there is a possibility that the CFRP will be slightly bent in the manufacturing process thereof. In the case where the CFRP is bent, the base plate 3 needs to be adjusted to achieve the desired levelness. The levelness may be increased by, for example, subjecting the top surface of the base plate 3 to a grinding process or the like. However, in the case the base plate 3 is made of CFRP, there is a risk that fibers contained in the CFRP, which is the base material, will break and the rigidity (strength) will be reduced. As a result, the desired rigidity (strength) cannot be obtained. In contrast, with the base plate 3 of the workpiece fixing jig 1 according to the present embodiment, in which the bottom surfaces of the insert members serve as the seat surfaces for the jig plate 2, the bottom surfaces of the insert members, which serve as the seat surfaces, can be subjected to the grinding process or the like to change the amount by which the insert members project from the bottom surface of the base plate 3. Thus, the levelness of the top surface of the base plate 3 can be adjusted, and the levelness can be increased as a result of the adjustment.

In addition, with the workpiece fixing jig 1 according to the present embodiment, the devices placed on the base plate 3, such as the seat blocks 4 and the clamping devices 5, are not fixed to the base plate 3 by directly screwing the screw members into the base plate 3. Instead, the threaded-hole members are inserted in and fixed to the base plate 3, and the screw members are screwed into the female threaded holes formed in the threaded-hole members fixed to the base plate 3. Accordingly, the fastening force generated by the screw members can be increased, and the devices can be installed in a stable manner.

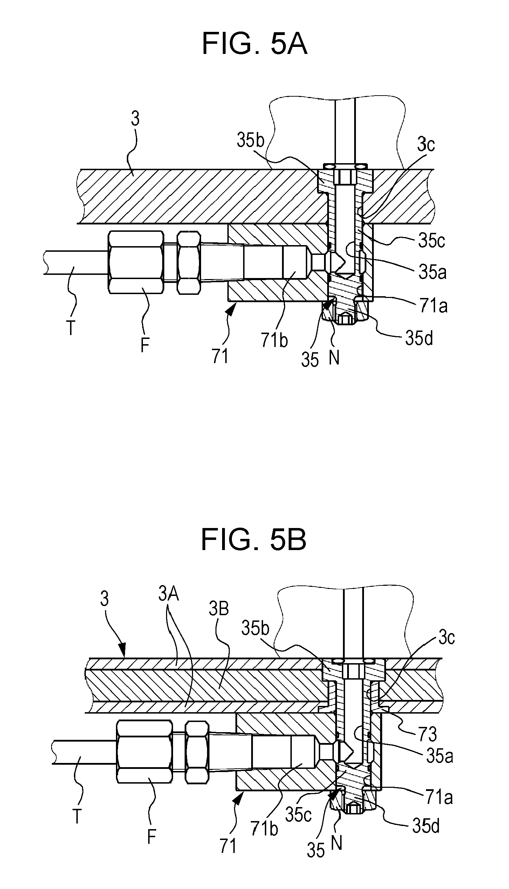

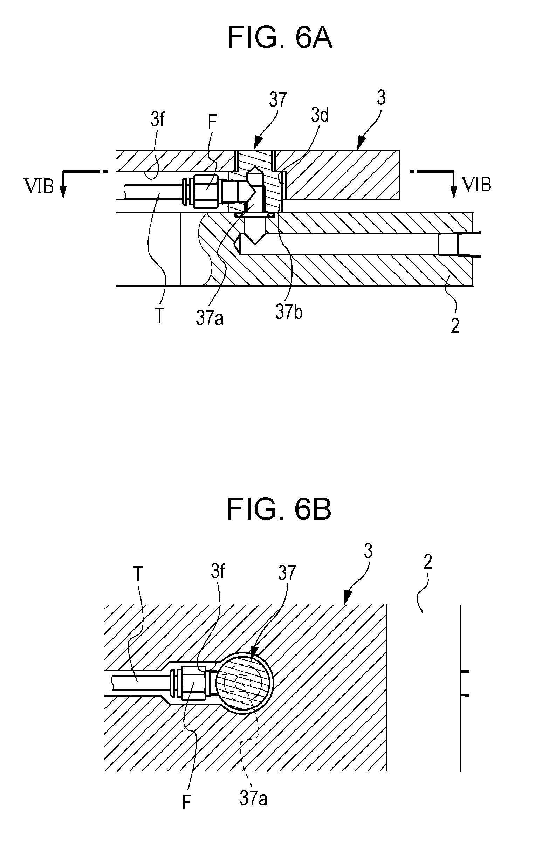

Although an embodiment of the present invention has been described, the present invention is not limited to the above-described embodiment, and may also be carried out in any of the following embodiments (modifications).
1) In the above-described embodiment, to increase the levelness of the top surface of the base plate 3, the metal insert members are arranged so as to project from the bottom surface of the base plate 3, and the bottom surfaces of the insert members serve as the seat surfaces of the base plate 3 for the jig plate 2. However, the field of use of the workpiece fixing jig 1 according to the present invention is not limited to the field of metal processing using a machine tool, in which high levelness is required as described above, and the workpiece fixing jig 1 may also be used in other fields in which bending of the base plate 3 does not cause a problem. Therefore, it is not always necessary that the bottom surfaces of the insert members serve as the seat surfaces. In other words, when it is assumed that the workpiece fixing jig 1 is used in the field in which bending of the base plate 3 does not cause a problem, it is not necessary that the insert members project from the bottom surface of the base plate 3, and the bottom surface of the base plate 3 may serve as a seat surface for the jig plate 2.
   In addition, in the structure of the above-described embodiment, the workpiece W is placed on the seat blocks 4, which serve as the reference seats, and the positioning block 61 of the jig 1. In other words, the workpiece W is disposed on an imaginary plane defined by the seat surfaces of the three seat blocks 4 and the bottom surface of the receiving portion 61 a of the positioning block 61. Therefore, even when the levelness of the top surface of the base plate 3 is not sufficient, the workpiece W can be retained in the desired position as long as the imaginary plane has a high levelness. Therefore, the levelness of the imaginary plane may be increased instead of increasing the levelness of the top surface of the base plate 3 as in the above-described embodiment. In addition, in the structure of the above-described embodiment, the seat blocks 4 and the positioning block 61 are installed on (fixed to) the base plate 3 such that they are mounted on the flange portions of the threaded-hole members that project from the top surface of the base plate 3, as described above. Accordingly, the levelness of the imaginary plane can be adjusted by subjecting the top surfaces of the flange portions of the threaded-hole members to a grinding process or the like to change the amount by which each flange portion projects from the top surface of the base plate 3. Such an adjustment may be performed to increase the levelness of the imaginary plane. Also in that case, the bottom surface of the base plate 3 may serve as a seat surface for the jig plate 2.
2) In the above-described embodiment, the insert members are fixed to the base plate 3 by screw-fastening the insert members to the base plate 3 and by using an adhesive. However, the fixing method is not limited to that in the above-described embodiment, and the structures illustrated in Figs. 5A and 5B, for example, may instead be used. In the structures illustrated in Figs. 5A and 5B, the base plate 3 is sandwiched by an insert member and a block member so that the insert member is fixed to the base plate 3. This will be described in more detail below.
   In the structure illustrated in Fig. 5A, similar to the inserted member according to the above-described embodiment, an insert member 35 made of a metal is a cylindrical member having a flange portion 35b at one end thereof. An attachment hole (through hole) 3c is formed in the base plate 3. To be capable of receiving the flange portion 35b of the insert member 35, the attachment hole 3c is formed such that the inner diameter thereof changes at an intermediate point in the thickness direction and a step portion is formed therein. In this example, the insert member 35 is inserted from the top side of the base plate 3. Accordingly, the inner diameter of a portion of the attachment hole 3c at the top side of the base plate 3 is greater than that of a portion of the attachment hole 3c at the bottom side of the base plate 3. In addition, in this example, the dimension in the axial direction (length) of the insert member 35 is sufficiently greater than the thickness of the base plate 3. In the illustrated example, the length of the insert member 35 is greater than or equal to twice the thickness of the base plate 3.
   The structure illustrated in Fig. 5A includes a rectangular-parallelepiped-shaped fastening block 71 having a through hole 71a. The fastening block 71 is provided on the bottom surface of the base plate 3 such that the center of the through hole 71 a coincides with the center of the attachment hole 3c in the base plate 3 in plan view. The insert member 35 is inserted through the attachment hole 3c from the top side of the base plate 3, and a shaft portion 35c of the insert member 35 is inserted through the through hole 71a in the fastening block 71. The dimension of the fastening block 71 in the axial direction of the through hole 71 a is smaller than the distance by which the insert member 35 that extends through the attachment hole 3c projects from the bottom surface of the base plate 3 in the state in which an end surface of the flange portion 35b of the inserted member 35 is in contact with the step portion of the attachment hole 3c. Therefore, an end portion 35d (portion at an end opposite to the end at which the flange portion 35b is formed) of the insert member 35 projects from the bottom surface of the fastening block 71 in the state in which the insert member 35 is inserted through the attachment hole 3c of the base plate 3 and the through hole 71 a of the fastening block 71 and in which the top surface of the fastening block 71 is in contact with the bottom surface of the base plate 3.
   The diameter of the end portion 35d of the insert member 35 is smaller than that of the shaft portion 35c, and the outer peripheral surface of the end portion 35d is male-threaded. A nut N is screwed onto the end portion 35d of the insert member 35, which is inserted through the attachment hole 3c of the base plate 3 and the through hole 71 a of the fastening block 71 as described above. Thus, the base plate 3 is clamped between the flange portion 35b of the insert member 35 and the fastening block 71, so that the base plate 3 and the insert member 35 are fixed to each other, that is, the insert member 35 is fixed to the base plate 3. The end portion 35d of the insert member 35 has a hexagonal socket, so that a hexagonal wrench or the like may be used to prevent the insert member 35 from rotating. Thus, the insert member 35 can be prevented from rotating together with the nut N when the nut N is being screwed onto the insert member 35. The hexagonal socket in the insert member 35 may be formed in an end surface of the flange portion 35b instead of the end portion 35d.
   In the structure illustrated in Fig. 5A, the insert member 35 has a flow path hole 35a that functions as a fluid channel and that opens in the top surface of the flange portion 35b at one end thereof. The flow path hole 35a has a bottom in the axial direction, and opens in a side surface of the shaft portion 35c at the other end thereof. The fastening block 71 has a fluid channel 71 b that extends perpendicularly to the through hole 71 a so that the fluid channel 71 b opens in the through hole 71 a and a side surface of the fastening block 71. In the state in which the insert member 35 is inserted through the fastening block 71, the flow path hole 35a in the insert member 35 communicates with the fluid channel 71 b of the fastening block 71 through the opening in the side surface of the insert member 35. A fluid pipe T is connected to the fastening block 71 (fluid channel 71 b) through a pipe joint F, and fluid that is introduced through the fluid pipes T is supplied to a device on the base plate 3 through the fluid channel 71 b in the fastening block 71 and the flow path hole 35a in the insert member 35.
   In this example, components such as the fastening block 71 and the fluid pipe T are disposed under the base plate 3. Accordingly, the jig plate 2 on which the base plate 3 is placed has grooves or holes at locations (regions) in which these components are disposed.
3) In the above-described embodiment, the entire body of the base plate 3 is made of CFRP. However, the structure of the base plate 3 is not limited to this, and the base plate 3 may instead have a sandwich structure in which a core material (for example, a foam material) is interposed between plate members made of CFRP that function as surface materials.
   Fig. 5B illustrates the case in which the base plate 3 illustrated in Fig. 5A has the above-described sandwich structure. The base plate 3 includes a pair of plate members 3A made of CFRP and a core material 3B made of a foam material or the like. The core material 3B is interposed between the plate members 3A and fixed to the plate members 3A with an adhesive or the like. In the case where the insert member 35 is attached to the base plate 3 as illustrated in Figs. 5A and 5B, the base plate 3 is clamped between the flange portion 35b of the insert member 35 and the fastening block 71. Accordingly, when the nut N is tightened, the base plate 3 receives forces at both sides thereof in the thickness direction. Therefore, in the case where the base plate 3 has the above-described sandwich structure, there is a risk that the core material 3B will be deformed in the thickness direction when the nut N is tightened. Accordingly, in the structure illustrated in Fig. 5B, a sleeve 73 that is disposed between the flange portion 35b of the insert member 35 and the fastening block 71 so as to be in contact with both the flange portion 35b and the fastening block 71.
4) In the above-described example, the flow path hole formed in the insert member in the axial direction extends through the base plate 3 in the thickness direction. However, in the present invention, the flow path hole is not limited to this, and may instead be formed such that one end of the flow path hole opens in a side surface of the insert member in a region in which the base plate 3 is present in the thickness direction.
   More specifically, in the structure illustrated in Figs. 6A and 6B, an insert member 37 is inserted in and fixed to an attachment hole 3d in a base plate 3 such that a large-diameter flange portion 37b is at the bottom side of the base plate 3. The flow path hole 37a in the insert member 37 opens in the bottom surface of the insert member 37 (surface that is in contact with a jig plate 2) at one end thereof. The flow path hole 37a has a bottom in the axial direction, and opens in a side surface of the insert member 37 (flange portion 37b) at the other end thereof. A pipe joint F is attached to the insert member 37 so as to be connected to the other end of the flow path hole 37a. The flow path hole 37a communicates with a fluid pipe T, through which fluid is supplied (and/or discharged), by the pipe joint F.
   In such a structure, the pipe joint F and the fluid pipe T are disposed in a region in which the base plate 3 is present in the thickness direction. Therefore, as illustrated in Figs. 6A and 6B, the base plate 3 has a groove 3f that opens in the bottom surface of the base plate 3 in a region in which the pipe joint F and the fluid pipe T are arranged. The groove 3f is formed when CFRP, which is the base material of the base plate 3, is formed. In the above-described embodiment, the pressure oil is supplied to and discharged from the linear cylinder 63 of the positioning device 6 through the fluid pipes T positioned above the base plate 3. However, with the above-described structure, the pressure oil can be supplied to and discharged from the linear cylinder 63 through the fluid pipes T disposed in the base plate 3.
5) The following modifications are also included in the present invention.
   (1) In the above-described examples, the insert members have a cylindrical shape. However, the insert members according to the present invention are not limited those having a cylindrical shape, and may instead have a polygonal shape in cross section in a direction perpendicular to the axial direction. This also applies to the threaded-hole members in the above-described embodiment.
   (2) In the above-described embodiment, the jig 1 includes the clamping devices 5 as the devices arranged on the base plate 3. In other words, the clamping devices 5 are arranged on the base plate 3. However, the clamping devices 5 may instead be placed on the jig plate 2, as in the jig disclosed in the above-described Patent Document 1. In addition, the jig 1 may be configured such that the pressing mechanism (linear cylinder 63) of the positioning device 6 is also arranged on the jig plate 2. However, the positioning block 61 is preferably arranged on the base plate 3.
   (3) In the above-described embodiment, the jig plate 2 on which the base plate 3 is placed is made of a metal. However, similar to the base plate 3, the jig plate 2 may also be made of CFRP. In such a case, the fluid channels in the jig plate 2 are not formed as holes formed in the jig plate 2 as in the above-described embodiment. Instead, a groove similar to that formed in the base plate 3 in the example illustrated in Figs. 6A and 6B is formed in the jig plate 2, and fluid pipes T arranged in the groove are used as the fluid channels.

In the above-described embodiment, the jig 1 is configured such that the base plate 3 is placed on the jig plate 2. In other words, the jig 1 has a two-plate structure in which two plate materials are stacked. However, in the present invention, the jig plate 2 according to the above-described embodiment is not necessary, and the jig 1 may have a one-plate structure including only the base plate 3 as the plate material. In such a case, the pipe joints F are attached to side surfaces of the base plate 3 made of CFRP, and fluid pipes T arranged in a groove as described above are used as fluid channels.

The present invention is not limited to any of the above-described embodiments, and various modifications are possible within the scope of the present invention.

## Claims

1. A workpiece fixing jig (1) comprising:
a flat-plate-shaped base plate (3);
a reference seat (4) that is provided on the base plate (3) and on which a workpiece (W) is placed; and
a clamping device (5) that clamps the workpiece (W) in cooperation with the reference seat (4) by applying a pressing force to the workpiece (W) in a direction toward the reference seat (4),
wherein at least a top surface and a bottom surface of the base plate (3) is made of carbon-fiber-reinforced plastic,
wherein the base plate (3) has an attachment hole (3a, 3b, 3c, 3d) that extends through the base plate (3) in a thickness direction, and an insert member (31, 33, 35, 37) made of a metal is attached to the base plate (3) such that the insert member (31, 33, 35, 37) is inserted in the attachment hole (3a, 3b, 3c, 3d), and
wherein the insert member (31, 33, 35, 37) has a flow path hole (31 a, 33a, 35a, 37a) that functions as a fluid channel for enabling fluid to pass through the base plate (3).

2. The workpiece fixing jig (1) according to Claim 1, wherein the insert member projects from the bottom surface of the base plate (3) in a state in which the insert member is attached to the base plate (3), and
wherein the bottom surface of the insert member serves as a seat surface of the base plate (3).
